# EUROPÄISCHE PATENTSCHRIFT

(11) **EP 1 127 988 B1**
(45) Veröffentlichungstag und Bekanntmachung des Hinweises auf die Patenterteilung: **16.08.2006**
(21) Anmeldenummer: 01102337.1
(22) Anmeldetag: 01.02.2001
(51) Int. Cl.: E03F 5/04

(54) **Bodenablauf mit Schwimmerverschluss**
Gulley with float closure
Regard d'évacuation muni d'une fermeture à flotteur

(30) Priorität: 28.02.2000 DE 20003655 U
(43) Veröffentlichungstag der Anmeldung: 29.08.2001
(73) Patentinhaber: ACO SEVERIN AHLMANN GMBH & CO. KG, 24755 Rendsburg (DE)
(72) Erfinder: Zimmermann, Bernd, 65623 Netzbach (DE); Heinz, Hans-Willi, 56412 Niederelbert (DE)
(74) Vertreter: Bohnenberger, Johannes

(56) Entgegenhaltungen:
- EP-A- 0 810 332
- DE-A- 2 118 235
- SE-C- 222 843
- US-A- 1 700 636

## Beschreibung

Die Erfindung betrifft einen Bodenablauf mit Schwimmerverschluss nach dem Oberbegriff des Patentanspruches 1.

Bekannt und z.B. durch DIN 4043 (1982) genormt sind Bodenabläufe mit einer Heizölsperre, die verhindert, dass in den Ablauf einfließendes Heizöl oder andere Leichtflüssigkeit in die Ablaufleitung gelangt. Die Heizölsperre besteht aus einem eine Durchflussöffnung verschließenden Verschlussorgan, das von einem Schwimmer getragen wird oder an einem Schwimmer ausgebildet ist, wobei der Schwimmer in einem Führungskäfig vertikal geführt ist. Der Schwimmer mit Verschlussorgan ist so austariert, dass er im Wasser aufschwimmt, aber in spezifisch leichterer Flüssigkeit, wie Heizöl, untergeht. In dem Ablauf staut sich einfließendes Wasser bis zum Überfließen über eine Überlaufkante an. Falls sich in dem Wasservolumen durch zuströmendes Heizöl eine Heizölschicht ausreichender Dicke ansammelt, sinkt der Schwimmer ab, und das Verschlussorgan verschließt die Durchflussöffnung. Schwimmerverschlüsse in Bodenabläufen können auch als Rückstauverschluss ausgebildet sein, wobei ein Rückstauverschluss auch mit einer Heizölsperre kombiniert sein kann.

Bei den bisher bekannten Bodenabläufen mit Heizölsperre ist der Führungskäfig für den Schwimmer entweder von am Gehäuse angeformten Wänden und/oder Führungsrippen gebildet, (siehe DE-42 08 098 A1) oder als separates Teil gefertigt und in das Ablaufgehäuse eingesetzt und darin befestigt. Die direkte Anformung von Führungswänden und/oder -rippen am Gehäuse bedeutet einen hohen fertigungstechnischen Aufwand und erhöht erheblich das Gewicht des Ablaufgehäuses. Auch die getrennte Herstellung des Führungskäfigs und sein nachträgliches Montieren im Ablaufgehäuse ist fertigungstechnisch aufwändig.

Die DE 2 118 235 betrifft einen Hochwasserverschluss, also eine Rücklaufsperre. Die Einlauföffnungen des Einlaufrostes sind ausschließlich innerhalb des Querschnitts des Führungskäfigs angeordnet. Die Überlaufkante des Siphons ist außerhalb des Ablaufgehäuses angeordnet, so dass der sich im Normalfall ergebende Wasserspiegel nicht durch das Gehäuse sondern durch Zubauteile definiert ist.

Die Druckschrift US 1,700,636 zeigt ebenfalls eine Rücklaufsperre mit den zuvor beschriebenen Merkmalen. Der einzige Unterschied zur DE 2 1118 235 liegt darin, dass die Überlaufkante zur Definierung des Wasserspiegels im Gehäuse ausgebildet ist.

Die Druckschrift EP 08 10 332 A1 beschreibt einen Bodenablauf der gattungsgemäßen Art, bei dem zusätzlich noch ein Rückstauverschluss vorgesehen ist. Der Führungskäfig für den Schwimmer ist einstückig mit dem Gehäuse ausgebildet, auf welches der Einlaufrost aufgesetzt wird. Dieser Führungskäfig ist als dichter Zylinder ausgebildet.

Dir Druckschrift SE 222 843 zeigt ebenfalls einen gattungsgemäßen Bodenablauf, wobei die Einlauföffnungen de Einlaufrostes ausschließlich innerhalb des Querschnitts des Führungskäfigs vorgesehen sind. Die Ablaufkante zur Festlegung des Wasserspiegels ist außerhalb der Gesamtanordnung vorgesehen. Der hohlzylindrisch ausgebildete Führungskäfig weist eine Vielzahl von Öffnungen auf, die teils oberhalb des Flüssigkeitsspiegels, teils darunter und (soweit erkennbar) auch im Bereich des Flüssigkeitsspiegels selbst vorgesehen sind.

Bei den gattungsgemäßen Bodenabläufen besteht ein Problem dahin gehend, dass ein Verschließen der Ablauföffnung bei einer exakt definierten Leichtflüssigkeitsmenge nicht möglich ist. Beim Ablauf nach der EP-08 10 332 A1 besteht das Problem, dass die Leichtflüssigkeit am Unterrand des Führungskäfigs eintritt und nach oben steigt, dabei gleichzeitig aber auch gewisse Mengen der Leichflüssigkeit bei höherer Strömungsgeschwindigkeit in den Ablauf gelangen. Insbesondere kann erst dann, wenn der Füllraum bis zur Unterkante des Führungskäfigs für den Schwimmer mit Leichtflüssigkeit gefüllt ist, die eigentliche Wirkung des Schwimmers erzielt werden.

Der Erfindung liegt die Aufgabe zu Grunde, einen Bodenablauf der eingangs genannten Art dahin gehend aufzuzeigen, dass in einfacher Weise ein Bodenablauf mit hoher Betriebssicherheit entsteht, der eine effektieve Schmutzabscheidung gewährleistet.

Die erfindungsgemäße Lösung der Aufgabe ist im Anspruch 1 angegeben. Der Unteranspruch bezieht sich auf eine vorteilhafte weitere Ausgestaltung der Erfindung.

Durch das direkte Anformen des Führungskäfigs an der Unterseite des Einlaufrostes entfällt jeder gesonderte Herstellvorgang und Bearbeitungsvorgang für den Führungskäfig und seine Verbindung mit dem Ablaufgehäuse. Beim Herstellen des Einlaufrostes, in der Regel durch Gießen aus Gusseisen, bedeutet die zusätzliche Anformung eines Führungskäfigs an der Unterseite des Rostes keinen wesentlichen Mehraufwand an Arbeit und Material. Es ist auch keinerlei zusätzlicher Bearbeitungsschritt erforderlich.

Eine Ausführungsform der Erfindung wird anhand der Zeichnung erläutert.
- Fig. 1 zeigt einen Längsschnitt durch einen erfindungsgemäßen Bodenablauf mit Heizölsperre,
- Fig. 2 zeigt eine Draufsicht auf den Bodenablauf von Fig. 1.

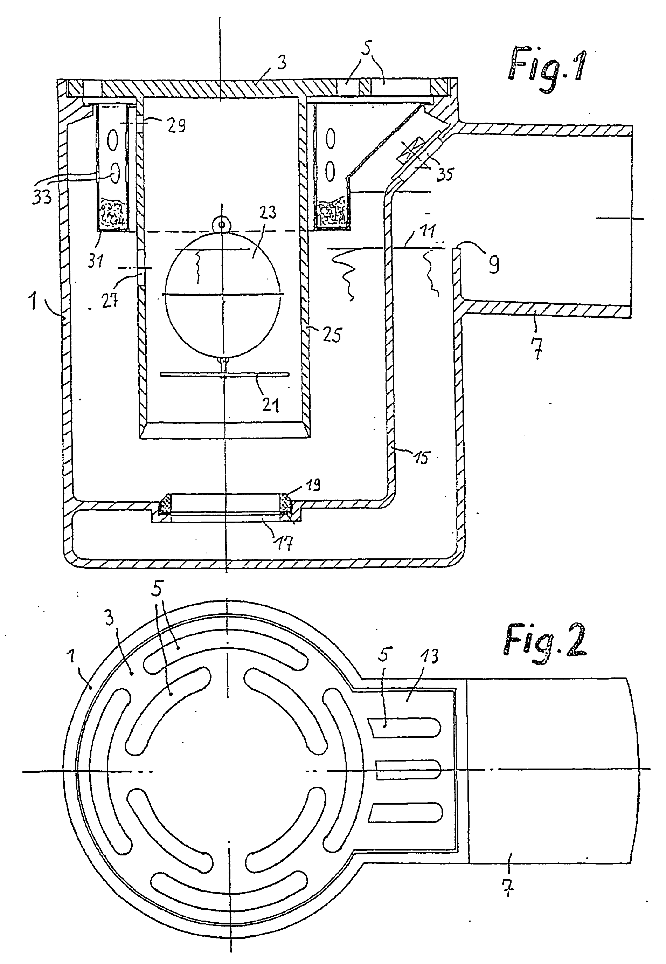

Der dargestellte Bodenablauf hat ein Ablaufgehäuse 1, in das oben ein Einlaufrost 3 eingesetzt ist, der Einlauföffnungen 5 aufweist. Das Gehäuse 1 hat einen Ablaufrohrstutzen 7, dem eine Überlaufkante 9 vorgelagert ist, die das Niveau 11 des Wasserspiegels im Ablaufgehäuse 1 festlegt. Abscheidegehäuse 1 und Deckel 3 haben in Draufsicht gemäß Fig. 2 in der Hauptsache eine kreisrunde Form, mit einem rechteckigen Vorsprung 13 am Übergang in den Ablaufrohrstutzen 7.

Im Gehäuse 1 befindet sich eine teils vertikal, teils horizontal verlaufende Trennwand 15, deren horizontaler Teil im Abstand über dem Boden des Gehäuses 1 verläuft und eine Durchflußöffnung 17 aufweist, die von einem ringförmigen Ventilsitz 19, z.B. aus elastomerem Material, umgeben ist. Die Durchflußöffnung 17 ist verschließbar durch ein tellerförmiges Verschlußglied 21, das von einem Schwimmer 23 getragen wird. Das Verschlußglied 21 könnte auch unmittelbar an dem Schwimmer 23 angeformt sein, wie aus DE 4208098 A1 bekannt.

Der Schwimmer 23 ist in einem Führungskäfig 25 vertikal beweglich geführt, der die Form eines zylindrischen Rohrstutzens hat und einstückig an der Unterseite des Einlaufrostes 3 angeformt ist. In der Wandung des Führungskäfigs 25 befindet sich in Höhe des Niveaus 11 des Wasserspiegels oder knapp darunter mindestens eine Öleintrittsöffnung 27 und im Abstand oberhalb des Niveaus 11 des Wasserspiegels mindestens eine Entlüftungsöffnung 29.

Der Einlaufrost 3 ist so ausgestaltet, daß er innerhalb des Querschnittsbereiches des Führungskäfig 25 einen geschlossenen Deckel darstellt und daß alle Einlauföffnungen 5 außerhalb des Querschnitts des Führungskäfigs 25 angeordnet sind.

In das Ablaufgehäuse 1 ist ferner unterhalb des Einlaufrostes 3 ein Schmutzfangeimer 31 mit zahlreichen seitlichen Öffnungen 33 eingesetzt, der den Führungskäfig 25 ringförmig umgibt. Am oberen Ende der Trennwand 15 befindet sich eine Reinigungsöffnung mit Verschluß 35, der nach Herausnehmen des Einlaufrostes 3 und Schmutzfängers 31 zugänglich ist.

Im Normalbetrieb des Ablaufs staut sich das Wasser bis zur Höhe des Niveaus 11 an, und der Schwimmer 23 schwimmt in dem angestauten Wasser auf, so daß das Verschlußorgan 21 im Abstand vom Ventilsitz 19 gehalten wird. Bei Wasserzulauf kann das Wasser ungehindert durch die Durchflußöffnung 17 und über die Überlaufkante 9 in den Ablaufstutzen 7 ablaufen. Bei Zulauf von Heizöl bildet sich im Bereich des Niveaus 11 eine Ölschicht zunehmender Dicke aus. Hat die Ölschicht eine ausreichende Dicke erreicht, so sinkt der Schwimmer 23 ab und das Verschlußglied 21 verschließt die Durchflußöffnung 17, so daß das Öl zurückgehalten wird.

## Patentansprüche

1. Bodenablauf mit Schwimmerverschluss als Heizölsperre zum Verhindern des Ablaufes von Heizöl oder dergleichen Leichtflüssigkeiten, mit einem Gehäuse (1), einem das Gehäuse oben abschließenden Einlaufrost (3) mit Einlauföffnungen (5), einer Durchflussöffnung (17), die durch ein von einem Schwimmer (23) getragenes Verschlussorgan (21) verschließbar ist, und einem Führungskäfig (25) zur Vertikalführung des Schwimmers (23), wobei die Einlauföffnungen (5) des Einlaufrostes (3) nur außerhalb des Querschnitts des Führungskäfigs (25) angeordnet sind und das Ablaufgehäuse eine Überlaufkante (9) aufweist, die das Niveau (11) des Wasserspiegels im Gehäuse festlegt,
**dadurch gekennzeichnet, dass**
der Führungskäfig (25) einstückig an der Unterseite des Einlaufrostes (3) angeformt ist, und in der Wand des Führungskäfigs (25) mindestens eine Ölzutrittsöffnung (27) unterhalb des Niveaus (11) und mindestens eine Entlüftungsöffnung (29) oberhalb des Niveaus (11) vorgesehen sind, wobei der Bodenablauf einen Schmutzfangeimer (31) mit zahlreichen seitlichen Öffnungen (33) aufweist, wobei der Schmutzfangeimer (31) ringförmig gestaltet ist, den Führungskäfig (25) umgibt, und derart unterhalb des Einlaufrostes (3) im Ablaufgehäuse (1) angeordnet ist, dass ein Fluid, das über die außerhalb des Querschnitts des Führungskäfigs (25) angeordneten Einlauföffnungen (5) in das Ablaufgehäuse (1) eintritt, erst in den Schmutzfangeimer (31) eintritt und aus den seitlichen Öffnungen (33) wieder austritt, und danach weiter in das Gehäuse (1) hineinfließt.

2. Bodenablauf nach Anspruch 1,
**dadurch gekennzeichnet, dass**
der Einlaufrost (3) im Wesentlichen kreisrund ausgebildet ist und der Führungskäfig (25) ebenfalls kreisrund und konzentrisch zum Einlaufrost (3) ausgebildet ist.

## Claims

1. Floor drain with floating closure as a heating-oil obstruction to prevent the drainage of heating oil or similar lightweight fluids, with a housing (1) the top of which is covered by an intake grating (3) with inlet openings (5), also with a discharge opening (17) that can be closed by a closure organ (21) carried by a float (23), and with a guide cage (25) for vertical guidance of the float (23), wherein the inlet openings (5) of the intake grating (3) are disposed only outside the cross section of the guide cage (25) and the drain housing comprises an overflow edge (9) that determines the level (11) of the water surface in the housing,
**characterized in that**
the guide cage (25) is formed integrally with the underside of the intake grating (3), and in the wall of the guide cage (25) there are provided at least one oil access opening (27) below the level (11) and at least one ventilation opening (29) above the level (11), such that the floor drain comprises a dirt-catching bucket (31) with many lateral openings (33), the dirt-catching bucket (31) being constructed in an annular shape and being disposed below the intake grating (3) in the drain housing (1) in such a way that a fluid that enters the drain housing (1) by way of the inlet openings (5) disposed outside the cross section of the guide cage (25) initially enters the dirt-catching bucket (31) and emerges out of the lateral openings (33), and thereafter flows further into the housing (1).

2. Floor drain according to Claim 1,
**characterized in that** the intake grating (3) is substantially circular in shape and the guide cage (25) is likewise made circular in shape and is concentric with the intake grating (3).

## Revendications

1. Regard d'évacuation muni d'une fermeture à flotteur avec barrage anti-fioul pour empêcher l'évacuation de fioul ou de liquides légers analogues, avec un corps (1), une grille d'entrée (3) avec des ouvertures d'entrée (5) qui ferme le corps vers le haut, une ouverture de passage (17) qui peut être obturée par un organe de fermeture (21) porté par un flotteur (23), et une cage de guidage (25) pour le guidage vertical du flotteur (23), dans lequel les ouvertures d'entrée (5) de la grille d'entrée (3) sont situées uniquement à l'extérieur de la section transversale de la cage de guidage (25) et le corps d'avaloir présente une arête de débordement (9), qui fixe le niveau (11) du ménisque d'eau dans le corps, **caractérisé en ce que** la cage de guidage (25) est formée d'une seule pièce sur la face inférieure de la grille d'entrée (3), et il est prévu dans la paroi de la cage de guidage (25) au moins une ouverture d'entrée de fioul (27) en dessous du niveau (11) et au moins une ouverture d'évacuation d'air (29) au-dessus du niveau (11), dans lequel le regard d'évacuation comporte un seau de retenue d'impuretés (31) avec plusieurs ouvertures latérales (33), dans lequel le seau de retenue d'impuretés (31) a une forme annulaire, entoure la cage de guidage (25) et est disposé en dessous de la grille d'entrée (3) dans le corps d'avaloir (1) de telle manière qu'un fluide, qui pénètre dans le corps d'avaloir (1) par les ouvertures d'entrée (5) disposées à l'extérieur de la section transversale de la cage de guidage (25), pénètre d'abord dans le seau de retenue d'impuretés (31) et sorte de nouveau par les ouvertures latérales (33) et s'écoule ensuite dans le corps (1).

2. Regard d'évacuation selon la revendication 1, **caractérisé en ce que** la grille d'entrée (3) est de forme essentiellement ronde et la cage de guidage (25) est également ronde et concentrique à la grille d'entrée (3).
